Europäisches Patentamt

European Patent Office

Office européen des brevets

(11) Veröffentlichungsnummer: **0 202 716**
**B1**

(12) **EUROPÄISCHE PATENTSCHRIFT**

(45) Veröffentlichungstag der Patentschrift: **25.07.90**

(51) Int. Cl.⁵: **G 11 B 15/10**

(21) Anmeldenummer: **86200853.9**

(22) Anmeldetag: **20.05.86**

(54) **Magnetbandkassettengerät mit zwei Tastenknöpfen.**

(30) Priorität: **23.05.85 DE 3518534**

(43) Veröffentlichungstag der Anmeldung:
**26.11.86 Patentblatt 86/48**

(45) Bekanntmachung des Hinweises auf die
Patenterteilung:
**25.07.90 Patentblatt 90/30**

(84) Benannte Vertragsstaaten:
**CH DE FR GB IT LI**

(56) Entgegenhaltungen:
**EP-A-0 052 393**
**EP-A-0 138 268**
**DE-A-3 226 718**
**DE-A-3 234 193**
**GB-A-2 034 098**
**GB-A-2 150 337**

**PATENT ABSTRACTS OF JAPAN, Band 6, Nr.
133 (P-129) 1011r, 20. Juli 1982;**

(73) Patentinhaber: **Philips Patentverwaltung GmbH
Wendenstrasse 35 Postfach 10 51 49
D-2000 Hamburg 1 (DE)**

(84) **DE**

(73) Patentinhaber: **N.V. Philips'
Gloeilampenfabrieken
Groenewoudseweg 1
NL-5621 BA Eindhoven (NL)**

(84) **CH FR GB IT LI**

(72) Erfinder: **Kunze, Norbert
Mozartstrasse 7
D-6332 Ehringshausen (DE)**

(74) Vertreter: **Kupfermann, Fritz-Joachim, Dipl.-Ing.
et al
Philips Patentverwaltung GmbH Wendenstrasse
35 Postfach 10 51 49
D-2000 Hamburg 1 (DE)**

## Beschreibung

Die Erfindung bezieht sich auf ein Magnetbandkassettengerät mit zwei Tastenknöpfen und zugeordneten Funktionstastenstangen, die beim getrennten Eindrücken der Tastenstangen über die Länge eines Einschub-Hubweges an Geräteteilen Einzelfunktionen ausüben, mit einer dritten Funktionsstange, die beim Verstellen eine weitere Einzelfunktion an einem Geräteteil ausübt und mit einem an einem Träger angeordneten Steuerglied versehen ist, das zur Verschieberichtung der Tastenstangen seitlich in einer Ebene verstellbar ist, wobei mittels Leitkonturen, die mit der Verschieberichtung einen Winkel einschließen, beim Einschieben jeweils nur einer Tastenstange durch seitliches Verstellen des Steuergliedes der Weg für die Verschiebung der zugeordneten Tastenstangen freigegeben wird, während die Leitkonturen das Steuerglied beim gemeinsamen Einschieben beider Tastenstangen gegen eine seitliche Verstellung derart blockieren, daß die dritte Funktion ausüübbar ist, bei der das Steuerglied mit den Tastenstangen mit einschiebbar ist und wobei der Träger und das Steuerglied mittels Rückstellmitteln in eine Mitelstellung gedrängt werden.

Ein derartiges Magnetbandgerät ist aus der DE-OS 32 26 718 bekannt. Dieses Magnetbandgerät ist mit zwei Tastenstangen versehen, von denen die eine Tastenstange, wenn sie allein eingedrückt wird, das Gerät beispielsweise auf schnellen Vorlauf schaltet. Wird der andere Tastenknopf allein eingedrückt, dann schaltet das Gerät auf schnellen Rücklauf. Werden beide Tastenstangen gemeinsam eingedrückt, dann wird über ein drittes Funktionsteil des Gerätes eine abgespielte Kassette aus der Kassettenaufnahme herausgeworfen. Um diese Mehrfach-Funktion der Tastenknöpfe und Tastenstangen verwirklichen zu können, sind in den Tastenstangen Leitschlitze vorgesehen, die mit einem stiftförmigen Steuerglied zusammenwirken, das auf das dritte Funktionteil einwirken kann.

Es ist Aufgabe der Erfindung, bei einem Gerät der eingangs erwähnten Art sicherzustellen, daß eine oder beide Tastenstangen, die beim Eindrükken einzeln nacheinander am Steuerglied vorgeigefahren sind, gemeinsam am Steuerglied vorbei wieder zurückfahren können.

Die gestellte Aufgabe ist erfindungsgemäß dadurch gelöst, daß das Steuerglied gegen die Kraft einer Feder senkrecht zur ersten Ebene beweglich angeordnet ist und daß die Tastenstangen schräge Auflaufkanten aufweisen, so daß die Tastenstangen im Falle einer seitlichen Blockierung des beweglichen Steuerglieds dieses beim Zurückfahren senkrecht zur ersten Ebene wegdrücken können.

Beim Zurückfahren beider Tastenstangen drükken diese das Steuerglied hoch und können damit unter diesem in ihre Ausgangsstellungen zurückfahren. Diese Konstruktion verhindert ein Blockieren der eingedrückten Tastenstangen infolge einer Fehlbedienung.

Nach einer weiteren Ausgestaltung der Erfindung ist vorgesehen, daß ein Federarm den Träger und das Steuerglied in seine Mittelstellung drängt. Ein solcher Federarm ist leicht aus Kunststoff zu fertigen und läßt sich integriert spritzen mit den übrigen Teilen auf der dritten Funktionsstange.

Nach einer weiteren Ausgestaltung der Erfindung ist vorgesehen, daß Längswände des Kastens Anschläge gegen ein zu weites Auslenken des das Steuerglied tragenden Trägerarmes bilden. Die Verstellbewegungen des Steuergliedes sind mittels der dadurch gebildeten Leitöffnung seitlich begrenzt. Mit Hilfe der Wände der Leitöffnung wird der seitliche Ausschlag der Bewegung des Steuergliedes begrenzt, und das Steuerglied kann dadurch schneller wieder in seine Mittelstellung zurückkehren.

Nach einer weiteren Ausgestaltung der Erfindung ist vorgesehen, daß der Träger mit dem Steuerglied in einem Kasten angeordnet ist, in dessen Innenraum die mit den Auflaufkanten versehenen Ansätze der Tastenstangen zwischen Kastenaußenwänden und Führungsstreifen geführt werden. Ein solcher Kasten stellt eine sichere Begrenzung der Leitöffnung dar.

Nach einer weiteren Ausgestaltung der Erfindung ist vorgesehen, daß der Kasten an seiner Rückwand ein Messerlager für den Träger des Steuergliedes und Rückstellmittel aufweist, die den Träger in seine in Einschubrichtung verlaufende Mittelstellung drängen. Ein solches Messerlager ist leichgängig und geradführungsstabil.

Nach einer weiteren Ausgestaltung der Erfindung ist vorgesehen, daß ein Federarm auf das Steuerglied einwirkt, der an der Vorderwand des Kastens angeordnet ist und der sich in seiner Mittelstellung in Eischubrichtung erstreckt. Die Rückfederung in die Mittelstellung wird dadurch verbessert.

Die Erfindung wird anhand der Zeichnung näher erläutert. Es zeigen:

Fig. 1 eine Ausführungsform des Gerätes zur Darstellung des Zusammenwirkens der Funktionsstange und der zwei Tastenstangen in Draufsicht,

Fig. 2 einen Schnitt durch einen Kasten und eine Seitenansicht durch die sich innerhalb des Kastens befindlichen Teile gemäß Pfeil VIII-VIII in Fig. 1.

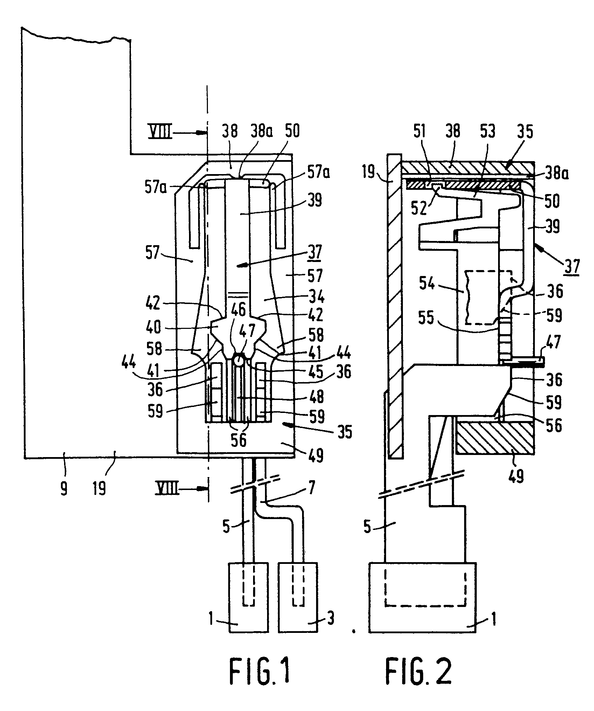

Die schaubildliche Darstellung nach Fig. 1 zeigt herausgelöst aus einem Magnetbandgerät die dem Benutzer zur Verfügung stehenden Tastenknöpfe 1, 3 und die von diesen bedienten Tastenstangen 5, 7 sowie eine Auswerfstange 9 zum Auswerfen von Kassetten aus einer nicht dargestellten Kassettenaufnahme.

Das Ausführungsbeispiel ist von besonderer Bedeutung, wenn die Tastenknöpfe 1 und 3 gemeinsam eingedrückt werden. Ein Ausleger 19 der dritten Funktionsstange 9 ist in diesem Fall mit einem Kasten 35 versehen, der als Kunststoffspritzteil zugleich mit anderen Spritzteilen an die dritte Funktionsstange 9 angespritzt ist. Im Innenraum 34 des rechteckigen Kastens 35, der eine Leitöffnung bildet, sind nasenförmige Ansätze 36 der Tastenstangen 5 und 7 verschieblich geführt. Innerhalb des Kastens 35 befindet sich ein L-förmiger Träger 37. Ein Arm 39 des L-förmigen Trägers 37 erstreckt sich in Längsrichtung der Tastenstangen 5 und 7; ein anderer Arm 50 des Trägers 37 erstreckt sich senkrecht zur Richtung der Tastenstangen und liegt über ein Messerlager 38a an einer Rückwand 38 des Kastens 35 an. Diese Rückwand 38 befindet sich an der den Tastenknöpfen 1 und 3 abgelegenen Seite des Kastens 35. Der sich in Längsrichtung der Tastenstangen 5 und 7 erstreckende Arm 39 der L-förmigen Halterung 37 trägt an seinem freien Ende ein kopfförmiges Steuerglied 40. Dieses kopfförmige Steuerglied 40 weist vordere Leitkonturen 41 und rückwärtige Leitkonturen 42 auf. Die vorderen Leitkonturen 41 divergieren in Einschubrichtung der Tastenstangen 5 und 6, und die rückwärtigen Leitkonturen 42 konvergieren in Einschieberichtung. Auf diese Weise bildet sich zwischen ihnen das kopfförmige Steuerglied 40 aus. Zum vordersten Ende hin schließen sich an die vorderen Leitkonturen 41 jeweils in Verschieberichtung verlaufende Ränder 44 an. Von einer Kopfkante 45 her erstreckt sich in Verschieberichtung in das kopfförmige Steuerglied 40 eine kurze Längsnut 46 hinein. In diese kurze Längsnut 46 greift der Kopf 47 eines Federarmes 48 ein, der an die Vorderwand 49 des Kastens 35 angespritzt ist.

Fig. 2 zeigt die Ausbildung nach Fig. 1 in einem Längsschnitt durch den Kasten 35, wodurch die Halterung 37 in Seitenansicht zu sehen ist. Man sieht aus Fig. 2, daß sich der Arm 39 des Trägers 37 etwa in horizontaler Richtung erstreckt, während der Arm 50, der sich an dem Messerlager 38a abstützt, vertikal verläuft. In dem Arm 50 ist eine Öffnung 51 vorgesehen, in die eine Nase 52 eines Federarmes 53 eingreift. Der Federarm 53 ist verbunden mit einem Kunststoffteil 54, das an seiner Oberseite 55 eine Unterstützung für den Arm 39 bildet. Das Kunststoffteil 54 ist über zwei Kunststoffstreifen 56 mit der Vorderwand 49 des Kastens 35 verbunden. Das Kunststoffteil 54 und die Streifen 56 bilden zusammen mit den Außenwänden des Kastens 35 Führungen für die Ansätze 36 der Tastenstangen 5 und 7.

In den Längswänden 57 des Kastens 35 sind auf Höhe des kopfförmigen Steuergliedes 40 Einbuchtungen 58 vorgesehen, in die das kopfförmige Steuerglied 40 einerseits etwas eindrückbar ist und die andererseits Anschläge gegen ein zu weites Auslenken des Armes 39 bilden.

An den Längswänden 57 sind parallel zu ihnen verlaufende Federarme 57a angeordnet, die nahe ihren freien Enden unter Vorspannung gegen den Arm 50 drücken. Der Federarm 48 und die Federarme 57a bilden Rückstellmittel, die immer versuchen, den Träger 37 in ihre Mittelstellung (Fig. 1) zu drängen.

Wird bei der Ausführungsform nach den Fig. 1 und 2 einer der Tastenknöpfe, beispielsweise der Tastenknopf 1, eingedrückt, dann stößt der Ansatz 36 der Tastenstange 5 gegen die eine vordere Leitkontur 41 des Armes 39 und drückt den Arm nach rechts. Damit ist der Weg freigegeben zum weiteren Eindrücken des Tastenknopfes 1. Wenn die Tastenstange 5 wieder herausfährt, dann drückt ihr Ansatz 36 den Arm 39 über die hintere Leitkontur 42 wieder nach rechts, und die Tastenstange kann voll ausfahren. Der Arm 39 wird mit Hilfe der Federarme 48 und 57a nach dem Beiseitedrücken stets wieder in seine Mittelstellung zurückgedreht. Dieselben Gerätefunktionen ergeben sich, wenn der andere Tastenknopf 3 die Tastenstange 7 eindrückt und diese wieder zurückfährt.

Werden beide Tastenknöpfe 1 und 3 gemeinsam eingedrückt, dann fahren beide Ansätze 36 gegen die beiden vorderen Leitkonturen 41. Auf diese Weise wird ein seitliches Wegdrehen des Armes 39 verhindert. Weil der Arm 39 stets in seiner Mittelstellung liegt, findet das Auflaufen auf die vorderen Leitkonturen 41 schnell statt. Die Ansätze 36 drücken nun bei weiterem Eindrücken der Tastenknöpfe 1 und 3 über den Arm 39 und die Rückwand 38 des Kastens 35 die Stange 9 für die dritte Funktion nach hinten. Beim Loslassen der Tastenknöpfe 1 und 3 fahren die Tastenstangen 5 und 7 wieder heraus.

Es kann nun passieren, daß dann, wenn eine Tastenstange nach hinten gefahren ist und sich deren Ansatz 3b hinter dem Steuerglied 40 befindet, auch noch die zweite Tastenstange eingedrückt wird. Auch deren Ansatz 36 kann das Steuerglied 40 noch einmal beiseite drücken, so daß dann beide Ansätze 36 hinter dem Steuerglied liegen. Um nun ein Verklemmen beim Zurückfahren der Tastenstangen zu vermeiden, sind die Ansätze mit schrägen Auflaufkanten 59 versehen. Diese schrägen Auflaufkanten 59 laufen gegen die hinteren Leitkonturen 42 auf und drücken den Arm 39 nach oben. Dieses Nach-Oben-Drücken wird ermöglicht, weil der federnde Arm 53 zurückweichen kann. Sind die beiden Ansätze 36 wieder vor das Steuerglied gelangt, dann drückt der federnde Arm 53 den Arm 50 wieder gegen die Messerlagerung 38a an der Rückwand 38. Der Arm 39 wird damit wieder auf den oberen Rand 55 des Kunststoffteiles 54 gedrückt.

Die Montage des L-förmigen Trägers 37 wird dadurch erleichtert, daß der Ansatz 52 an dem federnden Arm 53 in die Öffnung 51 eingreift, und zwar derart gestaltet ist, daß der Arm 50 beim Eindrücken in den Kasten 35 den Federarm 53 zunächst wegdrückt und die Nasen 52 dann in die Öffnung 51 einklinkt.

**Patentansprüche**

1. Magnetbandkassettengerät mit zwei Tastenknöpfen und zugeordneten Funktionsstangen (5, 7), die beim getrennten Eindrücken der Tastenstangen (5, 7) über die Länge eines Einschub-Hubweges an Geräteteilen Einzelfunktionen ausüben, mit einer dritten Funktionsstange (9), die beim Verstellen eine weitere Einzelfunktion an einem Geräteteil ausübt und mit einem an einem Träger (37) angeordneten Steuerglied (37, 40) versehen ist, das zur Verschieberichtung der Tastenstangen seitlich in einer ersten Ebene verstellbar ist, wobei mittels Leitkonturen (41, 42), die mit der Verschieberichtung einen Winkel einschließen, beim Einschieben jeweils nur einer Tastenstange durch seitliches Verstellen des Steuergliedes (40) der Weg für die Verschiebung der zugeordneten Tastenstange freigegeben wird, während die Leitkonturen (42) das Steuerglied (40) beim gemeinsamen Einschieben beider Tastenstangen (5, 7) gegen eine seitliche Verstellung derart blockieren, daß die dritte Funktion ausübbar ist, bei der das Steuerglied mit den Tastenstangen mit einschiebbar ist und wobei der Träger (37) und das Steuerglied (40) mittels Rückstellmitteln (48, 57a) in eine Mittelstellung gedrängt werden, dadurch gekennzeichnet, daß das Steuerglied (37, 40) gegen die Kraft einer Feder (53) senkrecht zur ersten Ebene beweglich angeordnet ist und daß die Tastenstangen (5, 7) schräge Auflaufkanten (59) aufweisen, so daß die Tastenstangen im Falle einer seitlichen Blockierung des beweglichen Steuerglieds (40) dieses beim Zurückfahren senkrecht zur ersten Ebene wegdrücken können.

2. Magnetbandkassettengerät nach Anspruch 1, dadurch gekennzeichnet, daß ein Federarm (48, 57a) den Träger (37) und das Steuerglied (40) in seine Mittelstellung drängt.

3. Magnetbandkassettengerät nach Anspruch 1, dadurch gekennzeichnet, daß die Längswände (57) des Kastens (35) Anschläge gegen ein zu weites Auslenken des das Steuerglied (40) tragenden Armes (39) bilden.

4. Magnetbandkassettengerät nach Anspruch 1, dadurch gekennzeichnet, daß der Träger (37) mit dem Steuerglied (40) in einem Kasten (35) angeordnet ist, in dessen Innenraum die mit den Auflaufkanten (59) versehenen Ansätze (36) der Tastenstangen (5, 7) zwischen Kastenaußenwänden und Führungsstreifen (56) geführt werden.

5. Magnetbandkassettengerät nach einem der Ansprüche 1 oder 4, dadurch gekennzeichnet, daß der Kasten (35) an seiner Rückwand (38) ein Messerlager (38a) für den Träger (37) des Steuergliedes (40) und Rückstellmittel (48, 57a) aufweist, die den Träger (37) in seine in Einschubrichtung verlaufende Mittelstellung drängen.

6. Magnetbandkassettengerät nach Anspruch 2, dadurch gekennzeichnet, daß ein Federarm (48) auf das Steuerglied (40) einwirkt, der an der Vorderwand (49) des Kastens (35) angeordnet ist und der sich in seiner Mittelstellung in Einschubrichtung erstreckt.

**Revendications**

1. Appareil à cassette de bande magnétique comportant deux touches à bouton-poussoir et des tiges de touches de commande (5, 7) associées, qui, lorsqu'elles sont enfoncées séparément sur la longueur d'une course d'enfoncement, exercent des fonctions individuelles au niveau d'éléments de l'appareil, une troisième tige de commande (9) qui, lorsqu'elle est déplacée, exerce une autre fonction individuelle au niveau d'un élément de l'appareil et un organe de commande (37, 40) monté sur un support (37), qui peut être déplacé dans un plan, latéralement par rapport à la direction de coulissement des tiges de touches, dans lequel, au moyen de contours de guidage (41, 42), qui forment un angle inscrit avec la direction de coulissement, chaque fois qu'une seule tige de touche est enfoncée, le trajet pour le coulissement de cette tige de touche est libéré par un déplacement latéral de l'organe de commande (40), tandis que lorsque les deux tiges de touches (5, 7) sont enfoncées simultanément, les contours de guidage (42) bloquent l'organe de commande (40) en l'empêchant de se déplacer latéralement d'une manière permettant d'exécuter la troisième fonction, dans laquelle l'organe de commande peut être enfoncé avec les tiges de touches et dans laquelle le support (37) et l'organe de commande (40) sont forcés d'occuper une position médiane par des moyens de rappel (48, 57a), caractérisé en ce que l'organe de commande (37, 40) est monté mobile à l'encontre de la sollicitation du ressort (53), perpendiculairement au premier plan et que les tiges de touches (5, 7) présentent des bords d'attaque obliques (59), de sorte que les tiges de touches peuvent, dans le cas d'un blocage latéral de l'organe de commande mobile (40), écarter cet organe perpendiculairement au premier plan lors de leur course de retour.

2. Appareil à cassette de bande magnétique suivant la revendication 1, caractérisé en ce qu'un bras de ressort (48, 57a) rappelle le support (37) et l'organe de commande (40) en position médiane.

3. Appareil à cassette de bande magnétique suivant la revendication 1, caractérisé en ce que les parois longitudinales (57) du réceptacle (35) forment des butées s'opposant à une déviation trop importante du bras (39) portant l'organe de commande (40).

4. Appareil à cassette de bande magnétique suivant la revendication 1, caractérisé en ce que le support (37) est disposé avec l'organe de commande (40) dans un réceptacle (35) à l'intérieur duquel les saillies (36) pourvues des bords d'attaque obliques (59) des tiges de touches (5, 7) sont guidées entre les parois extérieures du réceptacle et les bandes de guidage (56).

5. Appareil à cassette de bande magnétique suivant l'une ou l'autre des revendications 1 et 4, caractérisé en ce que le réceptacle (35) comporte, au niveau de sa paroi postérieure (38), un couteau d'appui (38a) pour le support (37) de l'organe de commande (40) et des moyens de rappel (48, 57a) qui sollicitent le support (37) dans sa position médiane orientée dans le sens d'enfoncement.

6. Appareil à cassette de bande magnétique suivant la revendication 2, caractérisé en ce que sur l'organe de commande (40) agit un bras de ressort (48) qui est monté sur la paroi antérieure (49) du réceptacle (35) et qui, dans sa position médiane, s'étend dans le sens d'enfoncement.

**Claims**

1. A magnetic-tape-cassette apparatus comprising two push-buttons and associated function rods (5, 7) which, when the push-button rods (5, 7) are pressed inward over the length of an inward stroke, cause parts of the apparatus to perform separate functions, and comprising a third function rod (9) which when actuated causes a part of the apparatus to perform a further separate function and is provided with a control member (37, 40) which is arranged on a support (37) and relative to the direction of movement of the push-button rods is laterally movable in a first plane, a lateral movement of the control member (40) enabling the associated push-button rod to be moved by means of guide faces (41, 42), which are inclined relative to the direction of movement, each time that only one push-button rod is moved inward, whilst the guide faces (42) inhibit a lateral movement of the control member (40) when the two push-button rods (5, 7) are moved inward together, in such a manner that the third function can be performed, during which the control member can be moved inward with the push-button rods and the support (37) and the control member (40) are urged into a centre position by return means (48, 57a), characterized in that the control member (37, 40) is arranged to be movable perpendicularly to the first plane against the force of a spring (53) and in that the push-button rods (5, 7) exhibit bevelled edges (59) so that in the case that the movable control member (40) is laterally blocked the push-button rods can press said member away in a direction perpendicular to the first plane during the return movement.

2. A magnetic-tape-cassette apparatus as claimed in Claim 1, characterized in that a spring arm (48, 57a) urges the support (37) and the control member (40) into their centre positions.

3. A magnetic-tape-cassette apparatus as claimed in Claim 1, characterized in that the longitudinal walls (57) of the box (35) constitute stops to inhibit an excessive excursion of the arm (39) carrying the control member (40).

4. A magnetic-tape-cassette apparatus as claimed in Claim 1, characterized in that the support (37) carrying the control member (40) is arranged in a box (35) in whose interior the projections (36) of the push-button rods (5, 7), which projections have bevelled edges (59), are guided between outer walls of the box and guide strips (56).

5. A magnetic-tape-cassette apparatus as claimed in Claim 1 or 4, characterized in that the rear wall (38) of the box (35) is provided with a knife-edge bearing (38a) for the support (37) of the control member (40) and return means (48, 57a) which urge the support (37) into its centre position, which is oriented in the direction of inward movement.

6. A magnetic-tape-cassette apparatus as claimed in Claim 2, characterized in that a spring arm (48), which is arranged on the front wall (49), acts upon the control member (40) and in its centre position extends in the direction of inward movement.

FIG.1                    FIG.2